Europäisches Patentamt

European Patent Office

Office européen des brevets

(19)

(11) Veröffentlichungsnummer: **0 070 911**

**B1**

(12) **EUROPÄISCHE PATENTSCHRIFT**

(45) Veröffentlichungstag der Patentschrift:
15.10.86

(21) Anmeldenummer: 81105857.7

(22) Anmeldetag: 24.07.81

(51) Int. Cl.⁴: **B 29 C 41/32**

(54) Verfahren zur kontinuierlichen Herstellung von achsparallelen faserverstärkten Kunstharzprofilen und deren Verwendung in der Hochspannungstechnik.

(43) Veröffentlichungstag der Anmeldung:
09.02.83 Patentblatt 83/6

(45) Bekanntmachung des Hinweises auf die Patenterteilung:
15.10.86 Patentblatt 86/42

(84) Benannte Vertragsstaaten:
AT CH DE FR GB IT LI NL SE

(56) Entgegenhaltungen:
DE-A-2 814 773
FR-A-1 197 466
FR-A-1 253 255
FR-E-69 427
GB-A-2 064 413
LU-A-17 627
US-A-2 751 320
US-A-3 336 426

(73) Patentinhaber: Hoechst CeramTec
Aktiengesellschaft, Wilhelmstrasse 14, D-8672
Selb (DE)

(72) Erfinder: Kuhl, Martin, Sedanstrasse 8, D-8672
Selb/Bayern (DE)

(74) Vertreter: Reuter, Johann- Heinrich, Dr., HOECHST
AKTIENGESELLSCHAFT Zentrale Patentabteilung
Postfach 80 03 20, D-6230 Frankfurt/Main 80 (DE)

EP 0 070 911 B1

**Beschreibung**

Die Erfindung betrifft ein Verfahren zur kontinuierlichen Herstellung von achsparallel faserverstärkten Kunstharzprofilen, insbesondere von Rundstäben größeren Querschnitts und hoher Qualität zum Einsatz in der Hochspannungstechnik, indem Fasern von Spulen abgezogen, durch Lochplatten geführt, in Vorrichtungen mit dem Harz getränkt und nach der Formgebung mittels Düsen zu einem festen Profil im Härteofen ausgehärtet werden. Für die Anwendung in der Hochspannungstechnik müssen solche Kunstharzprofile neben hohen elektrischen Beanspruchungen gleichzeitig hohe mechanische Kräfte aushalten. Die mechanische Festigkeit der Kunstharzprofile wird insbesondere durch die achsparallele Faserorientierung erreicht, deren Anteil zwischen 40 und 75 Vol.-% beträgt. Hauptsächlich werden Glasfasern eingesetzt, aber auch alle anderen Fasern organischer und anorganischer Art sind verwendbar.

Verfahren dieser Art sind an sich bekannt. So wird in DE-B-1 264 742 eine Anlage beschrieben, wobei die angegebene Härtestrecke aus drei hintereinandergeschalteten Ofen mit jeweils einer vor jedem Ofen befindlichen Düse besteht und die Düsendurchmesser zum Ende der Anlage hin abnehmen. Diese Düsen sollen den Querschnitt des Profils formen. Dabei wird das überschüssige Harz zwischen den Fasern herausgepreßt. Bei dickwandigen Profilen wird die Verdichtung der Fasermatrix jedoch nur im äußeren Bereich des Profils stattfinden, so daß sich das Harz einen Ausweg quer zur Profilachse sucht, indem es das Profil seitlich aufbricht. Die Folge ist eine schlechte Glasfaserverteilung, insbesondere bei dickeren Rundstäben. Zum anderen reißen die Düsen beim Festwerden des Profils die empfindlichen Oberflächen auf, wodurch ebenfalls Risse erzeugt werden.

Dabei ist grundsätzlich festzustellen, daß in der Hochspannungstechnik nur Isolierteile verwendet werden können, die keinerlei innere Inhomogenitäten wie z. B. Luftblasen, Lunker und Risse enthalten. Diese Inhomogenitäten führen beim Anlegen einer Hochspannung an das Profil zu einer inneren Teilentladung, die einen elektrischen Langzeitdurchschlag auslösen können. Der Durchschlag kann dann auch zum mechanischen Versagen des Profils führen.

Solche Inhomogenitäten im Profil können jeweils bei den verschiedenen Verfahrensschritten auftreten, wie z. B. durch ungenügende Tränkung der Fasern, indem Luftblasen in das Profil hineingezogen werden. Andererseits kann es bei der Formgebung mittels Ziehdüsen zum Anbacken des Tränkharzes an der Formenwand kommen. Dabei kommt es zu Rißbildungen im Oberflächenbereich des Profils. Insbesondere bei der Verwendung hochaktiver Tränkharze und bei dickwandigen Profilen besteht die Gefahr, daß beim Aushärten des Harzes die entstehende Reaktionswärme nicht schnell genug abgeführt werden kann, was zu Schwundrissen im Profil führt.

Ein anderes Problem ergibt sich hinsichtlich der Faserverteilung über den Profilquerschnitt. Eine ungleichmäßige Faserverteilung führt zu inneren Spannungen und damit zu niedrigen mechanischen Eigenschaften der Profile und begünstigt die Entstehung von Schwundrissen im Profilinnern. Insbesondere bei der Herstellung von Rundstäben größeren Durchmessers von mehr als 3 Zentimetern, spielt die Faserverteilung eine wesentliche Rolle. Ebenso sind hohe Zugspannungen im Profil während seiner Herstellung zu vermeiden, denn das Tränkharz versucht immer dreidimensional bei der Aushärtung zu schrumpfen. Durch hohe Zugspannungen in Richtung der Profilachse wird das Tränkharz an seiner Schwindung in Achsrichtung des Profils gehindert, wobei ebenfalls Risse im Profil entstehen.

Aus der US-A-2751320 ist ein Verfahren zur Herstellung von faserverstärkten Kunstharz-Profilen bekannt, bei dem die Fasern vertikal in Tränkeinrichtungen eingebracht werden. Die Spulen mit den Fasern befinden sich auf ringförmigen Plattformen, die konzentrisch angeordnet sind. Da die einzelnen Ringe gegensinnig rotieren, liegen in fertigen Kunetherz-Profil die Fasern nicht völlig parallel vor, sondern sie sind, wie in einem gedrehten Seil, in mehreren Ebenen mit jeweils abwechselnder Spiralrichtung angeordnet.

Die mit Harz getränkten Fasern verlassen die Düsen der Tränkbäder und werden durch zwei nachfolgende Formgebungsdüsen zu einen Profil zusammengefaßt.

Nach den angegabenen Verfahren lassen sich Kunstharz-Profile, die völlig frei sind von inneren Defekten, nicht gut herstellen.

Beim Vorbeigleiten der Fasern an den Innenwänden der Formgebungsdüsen entstehen zwangsläufig in der Peripherie des Profils unerwünscht hohe Fasergehalte. Das Zusammenführen der Fasern nach dem Tränken, führt schließlich auch zu Lufteinschlüssen in den Zwickeln, die von den zusammenlaufenden Fasern gebildet werden.

Die vielen Düsen mit beträchtlichen Abstand in Boden der Tränkbäder führen zu relativ großen äußeren Tränkbädern. Daher muß relativ viel Harz in reaktiven Zustand ständig zur Verfügung stehen, von den jedoch nur wenig je Zeiteinheit verbraucht wird. Damit das Harz nicht schon in Tränkbad aushärtet, muß die Temperatur des Tränkharzes niedrig gehalten werden. Niedrige Harztemperaturen bedeuten jedoch eine hohe Tränkharz-Viskosität, bei der Luftblasen in die Fasern gelangen können. Das große Tränkbad bedingt auch einen großen Zusammenführungswinkel der getränkten Fasern.

Die Reaktionswärme wird erst in der Härtestrecke frei. Das Profil muß daher radial von außen nach innen aufgeheizt werden. Da die Peripherie des Profils vorher aushärtet, wird die Bildung von Lunkern begünstigt.

Der vorliegenden Erfindung liegt somit die Aufgabe zugrunde, homogene Kunstharzprofile zu erhalten, indem ein Verfahren der eingangs genannten Art dahingehend weiterentwickelt und verbessert wird, so daß Profile beliebigen Querschnitts erhalten werden, deren Inneres frei von Inhomogenitäten und deren Faseranteil zwischen 40 und 75 Vol.-% liegt. Insbesondere sollen solchermaßen hergestellte Profile größeren

2

Durchmessers zur Verwendung in der Hochspannungstechnik geeignet sein.

Die Lösung dieser Aufgabe erfolgt durch ein Verfahren, indem eine vertikale Anordnung der Vorrichtung für die Tränkung der Fasern, der Härtestrecke und der Zugvorrichtung des Profils vorliegt; das Profil von innen nach außen aus konzentrischen Teilquerschnitten aufgebaut wird, dessen Teilquerschnitt einzeln getränkt und seitlich nacheinander von innen beginnend nach außen zusammengefügt werden, wobei der vorangegangene Teilquerschnitt das jeweilige Tränkbad des neu zu bildenden Teilquerschnittes mit durchläuft; das Tränkharz nach dem jeweiligen Verlassen des Tränkbades am Profilumfang noch flüssig ist; sich unmittelbar nach dem letzten Tränkbad die Härtestrecke anschließt, wobei das herzustellende Profil mit Lufterhitzer beheizt wird.

Über die genannten Merkmale hinausgehende Einzelheiten zur Weiterbildung der Erfindung ergeben sich aus den Unteransprüchen.

Derartige Rundstäbe werden z. B. zur Herstellung von Hochspannungs-Verbund-Isolatoren aus Kunststoffen, als Schalt- und Erdungsstangen in Rochspannungsschaltern und -Anlagen, als Antennen-Isolatoren und in Hochspannungstransformatoren zum Befestigen der Wicklung benötigt.

Durch die vertikale Anordnung von Tränkbädern, Härtestrecke und der Zugvorrichtung ergeben sich entscheidende Vorteile der Anlage bezüglich der Qualität der Profile. Die senkrecht in die Tränkbäder einlaufenden Fasern lassen sich leichter als bei horizontalen Anlagen behandeln, denn das Tränkharz kann durch Kapillarwirkung infolge der geringen Abstände zwischen den einzelnen Fasern in diese eindringen, ohne daß Luftblasen erzeugt werden. Eine Deformation der Profile ist ebenfalls durch die vertikale Anordnung der Anlage ausgeschlossen. Entsprechend niedrig sind auch die Zugkräfte durch die Zugvorrichtung, da die Reibung der Fasern an den Tränkbädern sehr gering ist. Zumal auch vorgesehen ist, daß das jeweils getränkte Profil das Tränkbad im flüssigen Zustand verläßt, kann ein Ankleben des Trünkharzes an der Düse nicht mehr vorkommen.

Das Kernstück der Erfindung ist jedoch die Anordnung und Ausgestaltung der Tränkbäder.

Im Interesse einer zügigen Produktionsgeschwindigkeit soll die Tränkung wie auch die Härtung möglichst schnell vor sich gehen. Dies erreicht man, je dünner das Tränkharz ist, d. h. die Tränkharztemperatur soll so hoch wie möglich gewählt werden. Bei hohen Temperaturen neigt jedoch das Tränkharz zur schnellen Aushärtung. Um dieser Eigenschaft entgegen zu wirken, soll das Volumen des Tränkbades möglichst klein sein, damit die chemische Reaktion des Tränkharzes nicht schon im Tränkbad erfolgt.

Werden nun sehr viele Fasern in ein Tränkbad eingeführt, dann ergibt sich die Schwierigkeit der Aufrechterhaltung einer konstanten Temperatur über den Tränkbadquerschnitt. Dem Tränkbad kann einmal nur über seine Gefäßwand Heizleistung zugeführt werden, dabei besteht aber die Gefahr, daß bei größeren Tränkbädern in ihrem Zentrum die Temperatur leicht absinkt. Dort steigt dann die Harzviskosität, und die Fasern werden nicht mehr sauber getränkt. Teilt man dagegen den Gesamtquerschnitt des Profils in konzentrische Teilquerschnitte auf, können die Tränkbäder klein gehalten werden und eine gleichmäßige Badtemperatur kann aufrecht erhalten werden. Daher kann mit hohen Temperaturen und niedrigen Harzviskositäten gearbeitet werden.

Verläßt das Profil mit dem ersten Teilquerschnitt das erste Tränkbad und tritt in das zweite Tränkbad ein, so ist die Temperatur des ersten Teilquerschnittes vorzugsweise die gleiche wie die Badtemperatur des Bades für den zweiten Teilquerschnitt. Im ersten Teilquerschnitt kann es jetzt bereits zu den ersten Reaktionen des Tränkharzes kommen; da der Teilquerschnitt jedoch klein ist, ist keine hohe exotherme Reaktionstemperatur zu erwarten. Die exotherme Wärme wird zum Teil in das Tränkbad für den zweiten Teilquerschnitt abgeführt, d. h. die nachfolgend untereinander angeordneten Tränkbäder wirken als Kühlstrecke für den jeweils vorher geformten Teilquerschnitt. Auf diese Weise wird im Gegensatz zu den bekannten Verfahren auftretende exotherme Temperaturspitze in einzelne niedrige, zeitlich gegeneinander versetzte Temperaturspitzen aufgeteilt, die zudem noch gekühlt werden. Andererseits gibt es keine Probleme der Verbindung zwischen den einzelnen Teilquerschnitten, da diese zum Zeitpunkt ihrer gegenseitigen Berührung noch flüssig sind. Die Temperaturspitzen der Teilquerschnitte sind auch beeinflußbar durch den Abstand der Tränkbäder untereinander sowie die Größe der Teilquerschnitte.

Eine gute Faserverteilung im Profil ist ebenfalls gewährleistet, da das Profil nur einmal geformt wird, wobei alles überschüssige Harz in die Tränkbäder zurückgedrückt wird, d. h. senkrecht zur Profilachse tritt keine Harzströmung auf. Zudem besitzen alle Tränkbäder vorzugsweise die gleiche Temperatur, so daß eine gleichmäßige Temperaturverteilung über den Profilquerschnitt gewährleistet ist und damit keine inneren Spannungen im Profil auftreten.

Um diese Temperaturverteilung nicht zu stören, ist es auch zweckmäßig, die Temperatur der nachfolgenden Härtestrecke auf dem gleichen Temperaturniveau zu halten wie die Tränkbäder. Die Anwendung von Heißluft in der Härtestrecke erfüllt ähnliche Funktion wie die aufeinanderfolgenden Tränkbäder gleicher Temperatur. Auch kann die umspielende Luft dabei kühlend auf das Profil wirken.

Das erfindungsgemäße Verfahren und weitere Vorteile sollen anhand von Zeichnungen erläutert werden. Es zeigen:

Fig. 1: Die schematische Darstellung der Tränkungs- und Formgebungsanlage (oberer Teil der Anlage);
Fig. 2: die Querschnitts-Ansicht eines Tränkbades im Detail;
Fig. 3: die schematische Darstellung der Härtestrecke und der Zugvorrichtung (unterer Teil der Anlage);
Fig. 4: Draufsicht des erfindungsgemäßen Profils mit einzeln dargestellten Teilquerschnitten.

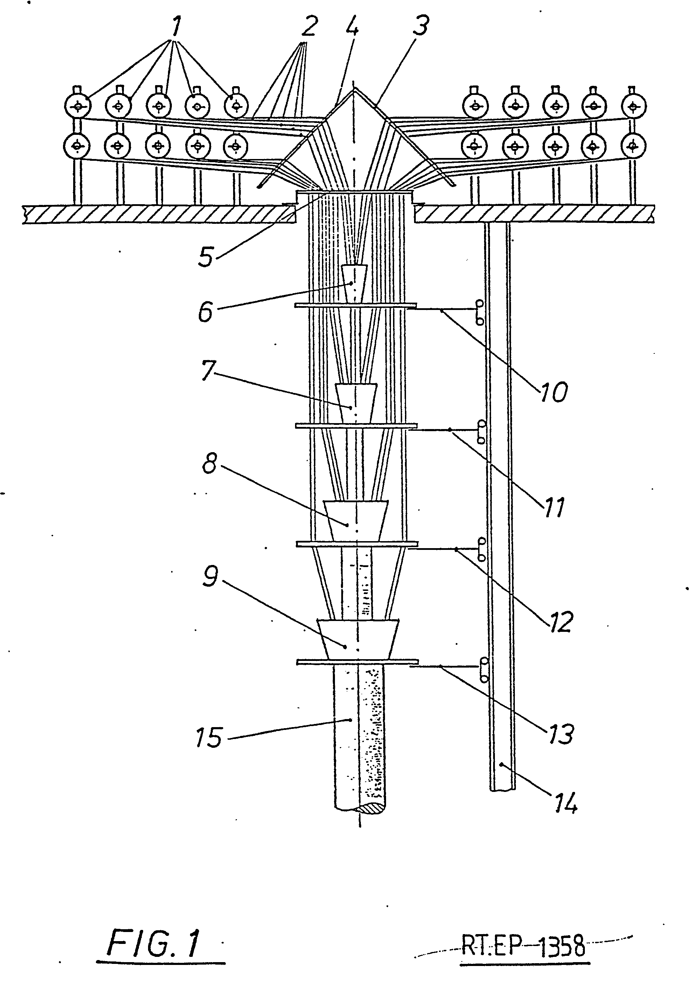

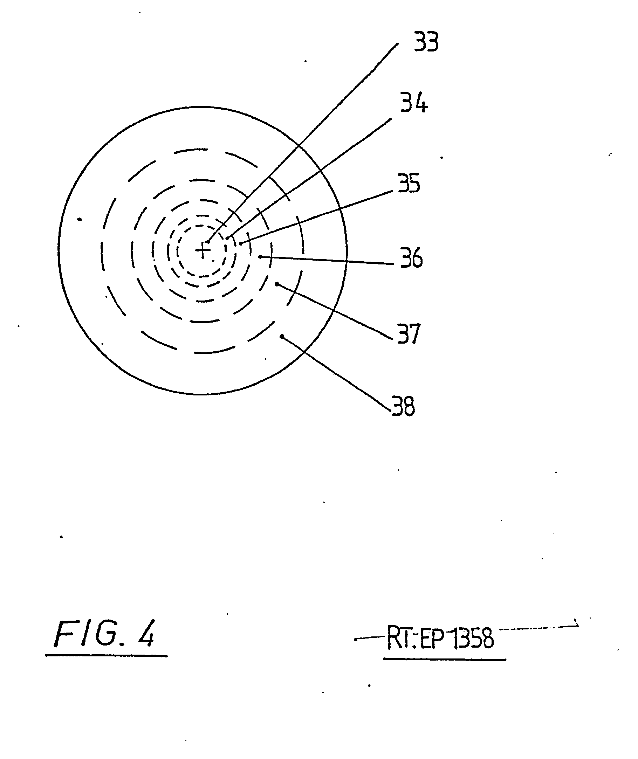

Fig. 1 stellt den oberen Teil der erfindungsgemäßen Anlage schematisch dar. Auf Gestellen sind die Spulen 1 deponiert, auf denen die Fasern endlos aufgewickelt sind. Die Fasern 2 werden über Lochplatten 3, 4, 5 so aufgeteilt, daß sie konzentrisch den untereinander angeordneten Tränkbädern 6, 7, 8, 9 zugeführt werden. Zuerst werden die Fasern 2 im Tränkbad 6 für das Zentrum des Profils 33 - siehe Fig. 4-getränkt und darauf nacheinander die weiteren Teilquerschnitte 34, 35, 36, 37, 38 des Profils 15. Die Tränkbäder 6, 7, 8, 9 sind auf Blechen 10, 11, 12, 13 befestigt, die ihrerseits gegeneinander auf einer gemeinsamen Gleitschiene 14 verstellbar angeordnet sind, wobei ihr gegenseitiger Abstand vorteilhaft zwischen 200 mm und 2000 mm liegt.

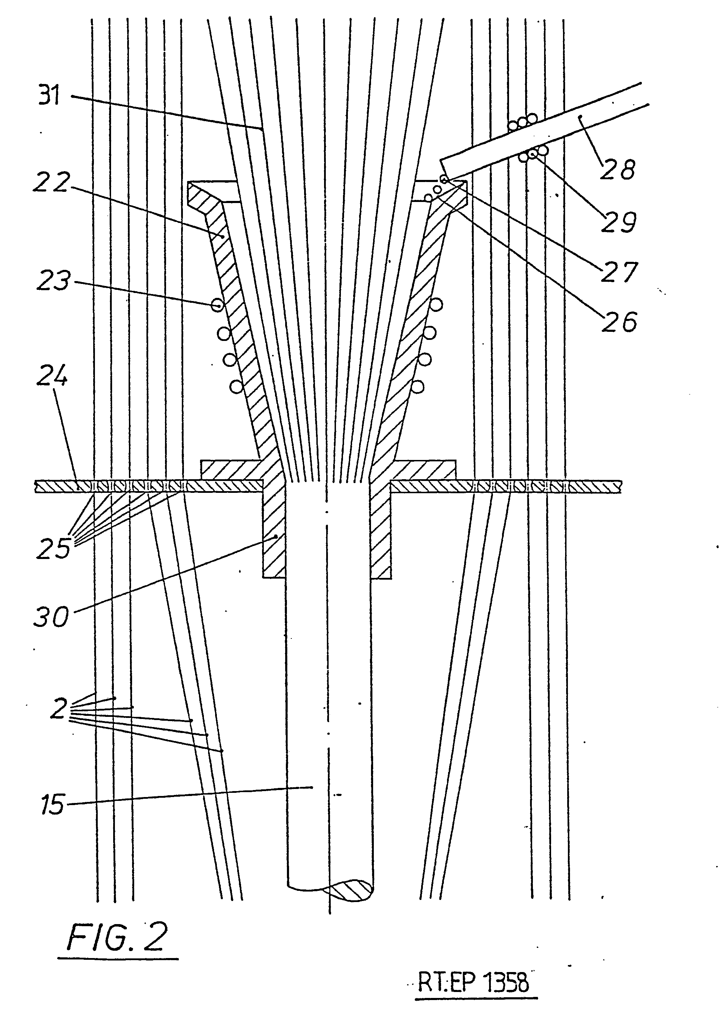

In Fig. 2 ist ein Tränkbad 22 beispielhaft für die Tränkung des zentralen Teilquerschnittes des Profils 15 im Schnitt dargestellt. Das trichterförmige Tränkbad 22 ist mit einer Heizung 23 versehen. Zweckmäßigerweise werden die Tränkbäder 6, 7, 8, 9 bei einer Temperatur zwischen 30 °C und 180 °C betrieben. Dabei ist es vorteilhaft und zweckmäßig, wenn alle Tränkbäder 6, 7, 8, 9 die gleiche Temperatur innerhalb von Regelgenauigkeiten von z. B. 90 ± 5 °C aufweisen. Das Tränkbad 22 ist auf einem Blech 24 montiert, das gleichzeitig als Fadenführung 25 für die Fasern 2 dient, die den unterhalb des Tränkbades 22 liegenden weiteren Tränkbädern zulaufen. Das Tränkbad 22 ist an seiner oberen Öffnung mit einer geneigten Fläche 26 zum Badzentrum hin versehen, auf die das vorgewärmte Tränkharz 27 auftropft und dabei sich die endgültige Temperatur des Tränkbades durch den Wärmeübergang vom Tränkbad zu den Harztropfen einstellt. Das Tränkharz 27 wird von einem hier nicht dargestellten Vorratsbehälter über Pumpen oder dergleichen dem Tränkbad 22 durch ein Rohr 28 zugeführt, auf dem sich eine Heizung 29 befindet.

Die untere Öffnung des Tränkbades 22 stellt gleichzeitig die Profildüse 30 dar, die den Teilquerschnitt des Profils 15 in die gewünschte Form und Abmessung bringt. Das Tränkbad 22 und die Fadenführung 25 sind in ihren Abmessungen so beschaffen, daß sie der Kontur des gewünschten Profils angepaßt sind, zum Beispiel ist bei einem Rundstab das Tränkbad 22 in seiner inneren Oberfläche als Kegelstumpf ausgebildet und die Fadenführungen 25 liegen konzentrisch auf Kreisen um das Tränkbad. Bei einem Rechteck dagegen ist die innere Kontur des Tränkbades 22 als Pyramidenstumpf ausgestaltet und die Fadenführungen 25 sind konzentrisch auf rechteckigen Umfangslinien angeordnet. Um die genaue Temperaturführung der Tränkbäder zu gewährleisten, kann es zweckmäßig sein, die Fasern 2 kurz vor ihrem Einlauf in die Tränkbäder 6, 7, 8, 9 vorzuheizen, wobei Heißluft oder auch Strahler angewendet werden können.

Die Aufteilung der Profilquerschnitte in einzelne, unabhängige voneinander getränkte Teilquerschnitte 33 bis 38 hängt vom Gesamt-Querschnitt und der Kompaktheit des Profils 15 ab. Dünnwandige U- und T-Profile wird man zweckmäßigerweise nicht in Teilquerschnitte unterteilen; die Aufteilung in Einzelquerschnitte ist dagegen bei Rund- und Vierkantstäben größeren Querschnitts erforderlich. Dabei ist es vorteilhaft, die Profilteilquerschnitte so zu bemessen, daß der zentrale Profilquerschnitt z. B verdoppelt wird, wenn es um die Dimensionierung des ihn umhüllenden Teilquerschnittes geht.

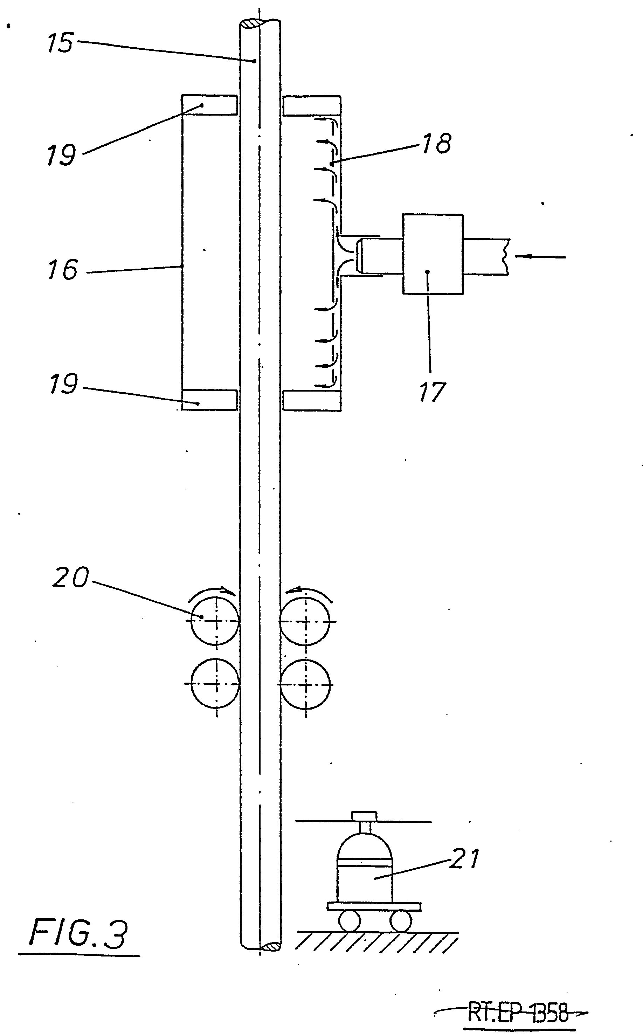

Die Fig. 3 erläutert den unteren Teil der erfindungsgemäßen Anlage. Unter Bezugnahme auf die Fig. 1 läuft aus dem untersten Tränkbad 9 das fertig getränkte profil 15 in die Härtestrecke 16. Sie besteht aus einem Blechgehäuse, in das die über einen Erhitzer 17 aufgeheizte Luft eingeleitet und über Lochbleche 18 gleichmäßig in der Härtestrecke 16 verteilt wird. Der Erhitzer ist mit einer regelbaren Heizleistung ausgestattet und mit Ventilen ausgerüstet, die eine kontinuierliche Frischluftzufuhr gestatten. Das Blechgehäuse der Härtestrecke 16 ist oben und unten mit je einem Deckel 19 verschlossen, in die konzentrische Öffnungen für den Durchgang des Profils 16 vorgesehen sind, wobei diese Öffnungen etwas größer bemessen als die Profilabmessungen sind. Durch den Spalt zwischen Profil und Deckel 19 kann die eingeblasene Heißluft aus der Härtestrecke 16 entweichen, so daß in der Härtestrecke 16 kein Überdruck entsteht. Diese Maßnahmen ermöglichen es, daß die Härtestrecke 16 auf einem über ihre Länge einheitlichen Temperaturniveau betrieben werden kann, was vorzugsweise dem Temperaturniveau der Tränkbäder 6, 7, 8, 9 entspricht. Das fertig gehärtete Profil 15 verläßt die Härtestrecke 16 und wird von einem Antrieb in vertikaler Richtung bewegt. Die Zugvorrichtung 20 ist zweckmäßigerweise regelbar in seiner Drehzahl ausgeführt. Durch die geringfügig auftretenden Teibungskräfte bei der Herstellung des Profils genügen als Profilabzug zwei gegeneinander laufende angetriebene Tollen; für sehr schwere Profile kann ein Raupenabzug erforderlich sein. Das fertige Profil 15 kann über eine Säge 21 auf die gewünschte Länge abgeschnitten werden, wobei die Säge mit der Vorschubgeschwindigkeit des Profils mitlaufen kann.

In Fig. 4 sind die Teilquerschnitte 33 bis 38 des erfindungsgemäßen Profils 15 dargestellt, das 40 bis 75 Vol.-% Faseranteil enthält. Als Faserwerkstoffe sind bekannte Fasern einsetzbar, z. B. Glasfasern aus Alumo-Boro-Silikatglas, Polyesterfaser aus gesättigten Polyestern wie aus Isophtalsäure und aliphatischem Diolen, Polyamid-Fasern aus E-Caprolactam oder aromatischen Polyamiden in Form von Rovings, Garn, Zwirn, Bändern und anderen Halbzeugarten. Die Fasern können je nach Tränkharz oberflächenbehandelt oder nicht oberflächenbehandelt sein.

Als Tränkharze sind bekannte Gieß- und Imprägnierharze einsetzbar. Gut geeignet für das erfindungsgemäße Verfahren sind z.B. Epoxidharze der Basis Bisphenol A, Hexahydrophtal-säure, Bisphenol F, Hydantoinen, Anilin sowie epoxidierte Olefine und Novolake, verarbeitet mit Dicarbonsäure-Anhydriden, aliphatischen oder aromatischen Aminen oder Polyaminen sowie Aminoamiden oder -imiden. Es sind auch Epoxide anderer chemischer Basis oder andere Härtungsmittel verwendbar.

Auch ungesättigte Polyesterharze, z. B. auf Basis Adipin-oder Fumarsäure und Diolen oder Glykolen, gelöst in Monostyrol oder Mono-Acrylaten, sind einsetzbar. Ferner sind auch Reaktionsharze anderer chemischer Basis wie Polyamide, Polyurethane, monomere Methacrylsäureester verwendbar. Reaktionsharzgemische und Fasern werden zweckmäßig nach den gewünschten Profileigenschaften gewählt bzw. nach den Bedingungen, unter denen das Profil eingesetzt werden soll. Dabei können die Profil-Eigenschaften auch durch Zugabe von bestimmten Additiven zum Reaktionsharzgemisch z. B. von Beschleunigern, Aktivatoren, Flexibilisatoren, Weichmachern oder Pigmenten gezielt beeinflußt werden.

**Beispiel**

Die Herstellung eines Rundstabes von z. B. 72 mm Durchmesser soll an einem Beispiel anschaulich gemacht werden:

Zuerst ermittelt man die Viskosität und Reaktivität des Tränkharzes, wobei die Verarbeitungstemperatur des Harzes festgelegt wird. In einem Vorversuch wird der zentrale Teilquerschnitt ermittelt, der sich ohne Schwierigkeiten tränken läßt und eine gleichmäßige Faserverteilung ergibt. Danach werden die anderen Teilquerschnitte festgelegt, die jeweils das 0,1 bis 50-fache des von ihm umhüllten Teilquerschnittes betragen.

Ist in einem Vorversuch für den zentralen Teilquerschnitt ein Durchmesser von 11,5 mm gefunden worden, dann ergeben sich die anderen Teilquerschnitte z. B. durch Verdoppelung wie folgt:

|  | Durchmesser (mm) | Querschnitt $(mm^3)$ |
|---|---|---|
| Zentraler Teilquerschnitt | 11,5 | 103 |
| Zweiter Teilquerschnitt | 16,1 | 205 |
| Dritter Teilquerschnitt | 25,5 | 509 |
| Vierter Teilquerschnitt | 36,0 | 1018 |
| Fünfter Teilquerschnitt | 51,0 | 2036 |
| Sechster Teilquerschnitt | 72,0 | 4072 |

Die Verdoppelung bzw. eine noch stärkere Vervielfachung der Teilquerschnitte ist deswegen möglich, weil die Teilquerschnitte mit zunehmendem Durchmesser auch in ihrer Oberfläche stark zunehmen, wodurch die Kühlwirkung erheblich erhöht wird. Die Aufteilung des Gesamtquerschnittes ist auch von der Reaktivität des Tränkharzes und vom Abstand der Tränkbäder untereinander sowie auch von der Ziehgeschwindigkeit her beeinflußbar.

**Stückliste**

Spulen 1
Fasern 2
Lochplatten 3, 4, 5
Tränkbäder 6, 7, 8, 9
Bleche 10, 11, 12, 13
Gleitschiene 14
Profil 15
Härtestrecke 16
Erhitzer 17
Lochbleche 18
Deckel 19
Zugvorrichtung 20
Säge 21
Tränkbad (trichterförmig) 22
Heizung (Tränkbad) 23
Blech 24
Fadenführung 25
geneigte Fläche 26
Tränkharz 27

Rohr 28
Heizung (Harzzufuhr) 29
Profildüse 30
Faserzulauf 31
Zentrum des Profils 32
Teilquerschnitte 33 - 38


**Patentansprüche**

1. Verfahren zur kontinuierlichen Herstellung von achsparallel faserverstärkten Kunststoffprofilen, insbesondere von Rundstäben größeren Querschnittes und hoher Qualität zum Einsatz in der Hochspannungstechnik, indem Fasern (2) von Spulen (1) abgezogen, durch Lochplatten (3, 4, 5) geführt, in Vorrichtungen (6, 7, 8, 9) mit dem Harz (27) getränkt und nach der Formgebung mittels Düsen (30) zu einem festen Profil (15) im Härteofen ausgehärtet werden, dadurch gekennzeichnet, daß
- eine vertikale Anordnung der Vorrichtung (6, 7, 8, 9,) für die Tränkung der Fasern (2), der Härtestrecke (16) und der Zugvorrichtung (20) des Profils (15) vorliegt;
- das Profil (15) von innen nach außen aus konzentrischen Teilquerschnitten (33, 34, 33, 36, 37, 38) aufgebaut wird, dessen Teilquerschnitte einzeln getränkt und seitlich nacheinander von innen beginnend nach außen zusammengefügt werden, wobei der vorangegangene Teilquerschnitt das jeweilige Tränkbad (7, 8, 9) des neu zu bildenden Teilquerschnittes mit durchläuft;
- das Tränkharz (27) nach dem jeweiligen Verlassen des Tränkbades (6, 7, 8, 9) am Profilumfang noch flüssig ist;
- sich unmittelbar nach dem letzten Tränkbad (9) die Härtestrecke (16) anschließt, wobei das herzustellende Profil (15) mit Lufterhitzer (17) beheizt wird.

2. Verfahren nach Anspruch 1, dadurch gekennzeichnet, daß die Profile (15) so bemessen sind, daß ein Teilquerschnitt, der einen zweiten inneren Teilquerschnitt umgibt, mehr als den 0,1-fachen Querschnitt und weniger als den 50-fachen Querschnitt des von ihm umhüllenden Teilquerschnittes aufweist.

3. Verfahren nach Anspruch 1 oder 2, dadurch gekennzeichnet, daß die innere Kontur des Tränkbades (22) trichterförmig ausgebildet ist, der Teilquerschnitt mit der Profilachse fluchtet und der Faserzulauf (31) in der größeren Trichteröffnung stattfindet und der Teilquerschnitt des Profils das Tränkbad (22) an der Profildüse (30) verläßt.

4. Verfahren nach mindestens einem der Ansprüche 1 bis 3, dadurch gekennzeichnet, daß die Anordnung des Faserzulaufs (31) vor Einlauf in eines der Tränkbäder (6, 7, 8, 9) so ausgebildet ist, daß die Faserführung (25) ein ähnliches Abbild des zu formenden Profiles (15) ergibt.

5. Verfahren nach mindestens einem der Ansprüche 1 bis 4, dadurch gekennzeichnet, daß der gegenseitige Abstand der Tränkbäder (6, 7, 8, 9) untereinander mindestens 200 bis höchstens 2000 mm beträgt.

6. Verfahren nach mindestens einem der Ansprüche 1 bis 5, dadurch gekennzeichnet, daß das Reaktionsharz (27) im vorgeheizten Zustand kontinuierlich den Tränkbädern (6, 7, 8, 9) zugeführt wird.

7. Verfahren nach mindestens einem der Ansprüche 1 bis 6, dadurch gekennzeichnet, daß die Tränkbäder (6, 7, 8, 9) auf einem einheitlichen Temperaturniveau zwischen 30°C und 180°C betrieben werden.

5. Verfahren nach Anspruch 7, dadurch gekennzeichnet, daß das Temperaturniveau der Härtestrecke gleich ist dem der Tränkbäder.

9. Verfahren nach Anspruch 1 oder 6, dadurch gekennzeichnet, daß die Tränkbäder (6, 7, 8, 9) an ihrem oberen Rand mit einer geneigten Fläche (26) versehen sind, auf die das zugefügte flüssige Reaktionsharz (27) auftropft.

10. Verfahren zur Herstellung von Verbund-Kunststoffisolatoren, dadurch gekennzeichnet, daß man gemäß Anspruch 1 achsparallele faserverstärkte Kunststoff-Profile herstellt und als Ausgangsprophdukt einsetzt.

11. Verfahren zur Herstellung von Hochspannungsgegenständen, wie Schaltstangen, Mast- und Antennenabspannungen, Isolierteilen in Hochspannungsanlagen, -maschinen und -geräten, dadurch gekennzeichnet, daß man gemäß Anspruch 1 achsparallele faserverstärkte Kunststoff-Profile herstellt und als Ausgangsprodukt einsetzt.


**Claims**

1. A process for continuous production of profiles of synthetic resins reinforced with axially parallel fibres, especially of rods of considerable cross-section and of high quality suitable for use in high voltage engineering, wherein fibres (2) are drawn from spools (1), led through perforated guide plates (3, 4, 5), impregnated with the resin (27) in impregnating means (6, 7, 8, 9) and, after shaping by means of nozzles (30) hardened to a solid profile in a hardening oven, characterized in that the means (6, 7, 8, 9) for impreganting the fibres (2), the hardening zone (16) and the means (20) for drawing the profile (15) are arranged vertically;
the profile is built up by concentric cross-sectional segments (33, 34, 35, 36, 37, 38) beginning at the center and proceeding towards the outside, said cross-sectional segments being impregnated individually and arranged laterally one after the other beginning at the center and proceeding towards the outside, the preceding cross-sectional segment passing through the corresponding impregnating bath (7, 8, 9) simultaneously with the new cross-sectional segment to be built;

the impregnating resin (27) is still liquid at the surface of the shaped body, when leaving the corresponding impregnating bath (6, 7, 8, 9);

the hardening zone (16) follows immediately the last impregnating bath (9) while the profile to be made (15) is heated with an air heater (17).

2. Process as claimed in claim 1, wherein the dimensions of the profiles (15) are such that the size of a crosssectional segment which surrounds another cross-sectional segment is from 0.1 to 50 times the size of the surrounded cross-sectional segment.

3. Process according to claim 1 or 2, wherein the internal contour of the impregnating bath (22) is funnel-shaped, the cross-sectional segment is in alignment with the axis of the profile and the fibres (31) enter the funnel through the larger opening and the cross-sectional segment of the profile leaves the impregnating bath (22) through shaping nozzle (30).

4. Process as claimed in at least one of claims 1 to 3, wherein the assembly of entering fibres (31) prior to entering one of the impregnating baths (6, 7, 8, 9) is such that the fiber guiding means (25) are arranged in a manner to provide a distribution similar to that of the profile (15) to be formed.

5. Process as claimed in at least one of claims 1 to 4, wherein successive impregnating baths (6, 7, 8, 9) are spaced from at least 200 mm to at most 2000 mm from each other.

6. Process as claimed in at least one of claims 1 to 5, wherein the reaction resin (27) is fed continuously to the impregnating baths (6, 7, 8, 9) in a preheated state.

7. Process as claimed in at least one of claims 1 to 6, wherein the impregnating baths (6, 7, 8, 9) are maintained at a uniform temperature level of from 30 to 180°C.

8. Process as claimed in claim 7, wherein the temperature level of the hardening zone is the same as that of the impregnating baths.

9. Process as claimed in claim 1 or 6 wherein the impregnating baths (6, 7, 8, 9) are provided at their upper margins with an inclined surface (26), onto which the added reaction resin (27) drops.

10. Process for the preparation of composite insulators of synthetic resin, wherein profiles of synthetic resin reinforced with fibres parallel to the axis are prepared according to claim 1, and used as starting product.

11. Process for the preparation of high voltage objects, such as switch rods, strain members for poles and antennae, insulating parts in high voltage plants, machines and apparatuses, wherein synthetic resin profiles reinforced with fibres parallel to their axis are prepared according to claim 1 and used as starting product.

**Revendications**

1. Procédé de fabrication continue de profilés en résine synthétique renforcés par des fibres parallèlement à l'axe, notamment de barres de grande section circulaire et de haute qualité pour être utilisées dans le domaine technique de la haute tension, procédé selon lequel des fibres (2) sont dévidées de bobines (1), guidées au travers de plaques perforées (3, 4, 5), imprégnées de la résiné (27) dans des dispositifs (6, 7, 8, 9) et, après le formage, durcies à l'aide de buses (30) sous forme d'un profilé solide (15) dans un four de durcissement, caractérisé en ce que

- le dispositif (6, 7, 8, 9) d'imprégnation des fibres (2), la ligne de durcissement (16) et le dispositif d'étirage (20) du profilé (15) sont disposés verticalement;

- le profilé (15) est constitué de sections partielles (33, 34, 35, 36, 37, 38) concentrique, commençant à l'interieur et en progressant vers l'extérieur, lesdites sections partielles étant imprégnées individuellement et étant groupées latéralement l'une après l'autre en commençant à l'intérieur et en progressant vers l'extérieur, la section partielle précédente traversant le bain d'imprégnation correspondant (7, 8, 9) avec la section partielle nouvelle à former;

- la résine d'imprégnation (27) est encore liquide sur la périphérie du profilé après la sortie du bain d'imprégnation (6, 7, 8, 9) correspondante;

- la ligne de durcissement (16) est placée directement à la suite du dernier bain d'imprégnation (9), le profilé à fabriquer (15) étant alors chauffé à l'aide d'un réchauffeur d'air (17).

2. Procédé selon la revendication 1, caractérisé en ce que les profilés (15) sont dimensionnés de telle sorte qu'une section partielle qui entoure une seconde section partielle intérieure présente une section qui est supérieure à 0,1 fois et inférieure à 50 fois la section de la section partielle qui l'entoure.

3. Procédé seion la revendication 1 ou 2, caractérisé en ce que le contour intérieur du bain d'imprégnation (22) est agencé en forme d'entonnoir, la section partielle coïncide avec l'axe du profilé, l'entrée (31) des fibres est située dans la grande ouverture de l'entonnoir et la section partielle du profilé sort du bain d'imprégnation (22) par la buse de formage de profilé (30).

4. Procédé selon au moins une des revendications 1 à 3, caractérisé en ce que l'entrée de fibres (31) est placée devant l'entrée dans un des bains d'imprégnation (6, 7, 8, 9) de telle sorte que le guidage des fibres (25) établisse une répartition analogue à celle du profilé à former (15).

5. Procédé selon au moins une des revendications 1 à 4, caractérisé en ce que l'espacement mutuel des bains d'imprégnation (6, 7, 8, 9) s'élève au moins à 200 mm et au plus à 2000 mm.

6. Procédé selon au moins une des revendications 1 à 5, caractérisé en ce que la résine de réaction (27) est introduite dans une condition préchauffée et de façon continue dans les bains d'imprégnation (6, 7, 8, 9).

7. Procédé selon au moins une des revendications 1 à 6, caractérisé en ce que les bains d'imprégnation (6, 7, 8, 9) fonctionnent à un niveau de température uniforme et compris entre 30°C et 180°C.

8. Procédé selon la revendication 7, caractérisé en ce que le niveau de température de la ligne de durcissement est égal à celui des bains d'imprégnation.

9. Procédé selon la revendication 1 ou 6, caractérisé en ce que les bains d'imprégnation (6, 7, 8, 9) sont pourvus, sur leur bord supérieur, d'une surface inclinée (26) sur laquelle s'égoutte la résine de réaction liquide (27) introduite.

10. Procédé de fabrication d'isolateurs en matière plastique composite, caractérisé en ce qu'on fabrique des profilés en matière plastique renforcés par des fibres parallèlement à l'axe conformément à la revendication 1, et on les utilise comme produit initial.

11. Procédé de fabrication d'articles pour haute tension, comme des barres de distribution, des élingues pour mâts et antennes, des parties isolantes intervenant dans des installations, des machines et appareils pour haute tension, caractérisé en ce qu'on fabrique des profilés en matière plastique renforcés par des fibres parallèlement à l'axe conformément à la revendication 1, et on les utilise comme produit initial.

**0 070 911**

*FIG. 1*

RT.EP 1358

FIG. 2

RT.EP 1358

15

19

18

16

19

17

20

21

*FIG.3*

5

33

34

35

36

37

38

*FIG. 4*

RT: EP 1358